# EUROPEAN PATENT SPECIFICATION

(11) **EP 1 636 893 B1**
(45) Date of publication and mention of the grant of the patent: **12.03.2008**
(21) Application number: 04743723.1
(22) Date of filing: 23.06.2004
(51) Int. Cl.: H02K 17/04

(54) **SINGLE-PHASE ASYNCHRONOUS MOTOR WITH STEPPED AIR GAP**
ASYNCHRONER EINPHASENMOTOR MIT STUFEN-LUFTSPALT
MOTEUR ASYNCHRONE MONOPHASE A ENTREFER ECHELONNE

(30) Priority: 23.06.2003 HU 0301907
(43) Date of publication of application: 22.03.2006
(73) Proprietor: KISS, Pal, 2351 Alsonemedi (HU)
(72) Inventor: SISA, Jozsef, H-3000 Hatvan (HU)
(74) Representative: Mak, Andras
(86) International application number: PCT/HU2004/000064
(87) International publication number: WO 2004/114504

(56) References cited:
- EP-A- 1 271 746
- GB-A- 2 067 849
- US-A- 3 528 171
- DATABASE WPI Derwent Publications Ltd., London, GB; AN 1993-310876 XP002303381 -& SU 1 765 874 A (ROST RAIL ENG INST) 30 September 1992 (1992-09-30)

## Description

The object of the invention is a single-phase asynchronous motor with stepped air gap, more particularly a single-phase induction motor that generates the nearly elliptical rotating magnetic field necessary for the operation of the motor by means of modifying the air gap size.

Because the air gaps formed in the stator of the single-phase asynchronous motor with stepped air gap according to the invention differ from each other due to their size and position, the elliptical rotating magnetic field is produced without the help of any auxiliary structural elements.

As it is widely known, single-phase induction motors with a rated power below 1000 W and a speed of 2800/min. are used in special-purpose drive applications and for automatizing tasks. The scope of application of such motors is extremely wide. For instance, they can be applied in special-purpose drives for light-industry applications, desk and wall-mounted ventilators, farm implements, lawn mowers, portable hand tools, household appliances, hair dryers, synchronous clocks, sewing machines, medical-diagnostic instruments, fans, auxiliary devices used in transport means, light engineering devices, etc. It would be difficult to provide a comprehensive list of practical applications.

It is a well-known fact that the basic structure of three-phase induction motors comprises a winding system where the three windings are disposed with 120-degree angular separation. When the winding system is connected to the three-phase power line, it produces in the motor a symmetrical rotating magnetic field that, cooperating with the rotor, provides for rotating movement and loadability.

Single-phase induction motors have essentially been developed from three-phase induction motors. As it is well known to those skilled in the art, in case one of the power lines of a "delta" connected, three-phase induction motor running with low load is disconnected, the machine will not stop. Instead, it will continue operating as a single-phase motor, with the rpm of the motor decreasing by 1-2 %, and the output power being cut back to half of the power achievable in three-phase mode.

In single-phase induction motors the magnetic field is only pulsating and not rotating, therefore the motor will not start "by itself" without taking special measures. Thus, for starting the motor a rotating magnetic field has to be produced. This is usually achieved by selecting one of the stationary phase coils and feeding thereto phase-delayed or phase-lead current on startup. The phase-delayed or phase-lead current is produced by adding an "extra" electronic element to the motor.

Currently produced and marketed single-phase motors can be divided into the following categories:
Single-phase motors comprising an auxiliary phase winding, with a serially connected resistor or capacitor
Shielded-pole or split-phase single-phase motors.

Motors belonging to the first group comprise separate main and auxiliary phase windings, located 90°, or 120° apart spatially. Time shift between magnetic flux in the main and auxiliary phase windings is provided by means of a capacitor or resistor. Such a configuration generates an elliptical magnetic field that provides a good approximation of the circular rotating field.

Shielded-pole motors of the second group comprise a special, single-turn auxiliary phase coil in addition to the main phase winding. This single-turn coil is applied for "shorting", or shielding a portion of the flux generated by the main phase winding. This configuration provides thereby that the flux of the main phase winding is split into two spatially separated parts, and also that a time shift is produced between the two flux parts which together generate an elliptical rotating field.

The above described basic structures have been realized by manufacturers in a number of concrete implementations.

A currently available implementation of single-phase induction motors of the first group can be known from US patent No. 4,381,482. The motor according to this invention comprises two separate rotors and two windings placed with an angular separation of 90°, the windings being connected to the power line by means of a switch.

A further solution is disclosed by US patent No. 4,371,802, where the rotating magnetic field is produced by means of a capacitor.

The solution that is closest to our invention is disclosed by the patent EP 1,271,746. The essence of this invention is that a specific group of stator teeth of the single-phase induction motor are shortened by cutting off the shoulder portion of said teeth. Thus, a varying air gap is produced that provides an elliptical rotating magnetic field both at start-up and in run-up state. However, a significant disadvantage of this solution is that the width of slot openings formed between the stator teeth is not uniform. Wide slot openings communicating with the air gap affect the reluctance of the air gap and produce higher-order harmonics in the magnetic flux of the motor. These harmonics reduce the starting torque and increase the waste power (dissipated as heat during operation).

The aim of the invention has been to provide a single-phase induction motor having a starting torque that is safely over 0.1 Nm under all conditions, ensuring therefore that the motor can be reliably started in all operation conditions that may be present in its various applications. It has also been our aim to provide a motor that can be economically produced on a large scale, with special regard to the amount of copper used and the manufacturing technology of the rotor and the stator. A further aim has been to provide a motor that can be assembled and wound with the least possible modification of conventional technology. Taking into account all of these considerations, a further aim has been that the efficiency of the stepped air gap motor should exceed 0.45.

According to our recognition the above objectives can be accomplished for a stepped air gap induction motor in case the stator of the motor is provided with longer teeth - providing a smaller air gap - and shorter teeth that provide a larger-size air gap, and provided that slot openings are disposed extending along the full length of the stator, the slot openings being narrowed in such a way that they are just wide enough to enable the insertion of winding. Based on the results of our systematic experiments we have also recognized that, due to the special combined effect of the rotor volume, the rotor circuit resistance and the stepped air gap, in case of the motor construction according to the invention the desired starting torque and - considering that the motor produces 55 % waste heat - the appropriate cooling can be provided if the diameter of the rotor falls into the range of 60-70 mm, the ratio of stator length and rotor diameter is between 0.6-0.85, and a 3-5 times greater air gap is produced between the rotor and the shorter teeth than the rotor and the longer teeth.

Thus, our invention is a single-phase asynchronous motor with stepped air gap comprising a laminated stator having shorter and longer teeth and slots adapted for receiving electromagnetic winding located there and a rotor having skewed slots. Narrowed slot openings, extending along the full length of the stator, are disposed between the shoulders of the longer teeth, between the shoulders of the shorter teeth, and between the shoulders of the longer and shorter teeth, with the diameter of the rotor falling into the range of 60-70 mm, and with the ratio of the stator length (L) and the rotor diameter being between 0.6 and 0.85, where the air gap between the rotor and the shorter teeth is 3-5 times greater than the air gap between the rotor and the longer teeth.

In a preferred embodiment of the inventive motor the width of the shoulders of the shorter teeth is equal to the width of the shoulders of the longer teeth.

In a further preferred embodiment of the inventive motor the shape of the shoulders of the shorter teeth is identical to the shape of the shoulders of the longer teeth.

In a still further preferred embodiment of the inventive motor the ratio of the stator length and the rotor diameter falls between 0.65 and 0.8.

In a further preferred embodiment of the inventive motor a shorter tooth is disposed on the stator in the median plane of the phase winding of the motor.

In yet another preferred embodiment of the inventive motor altogether 24 teeth are disposed on the stator thereof, of which 8-12 shorter teeth are located in two groups facing each other on opposite sides of the stator.

In another preferred embodiment of the inventive motor the skew of the slots of the rotor is in the range of 18-20°.

The inventive solution is based on the fact that, if reluctances in the magnetic circuit of the motor are distributed such that the reluctance is made up of two portions due to the configuration of the flux path in the air gap and the iron core material (passing through stator frame, tooth, rotor frame, and tooth), and the difference between the reluctances results in a time shift, then the reluctance differences will result in the production of an elliptical rotating magnetic field.

The configuration of motors implemented according to the invention is homogeneous with respect to magnetic saturation, and the stator teeth located between the slots are of uniform width.

The step of the air gap is realized by forming a step on the stator at a specific position relative to the winding. There is no step on the rotor surface. The differently sized air gaps ensure both at startup and in the run-up state the time shift between flux portions and thereby the elliptical rotating field and, cooperating with the rotor, the stabile, steady operation of the induction motor.

During the development process of the inventive motor, systematic experiments have been carried out. For one set of our experiments four motors were built on the basis of preliminary results in order to carry out measurements of starting torque, power and efficiency in various operating modes. All of the four motors had a 67 mm-diameter rotor, with the length of the stators of the four motors being 40, 45, 50, and 55 mm. The following table shows the input power (P₁), the starting torque in cold (M_{iH}) and warmed-up (M_{iM}) state, the input power, the efficiency, and the waste power dissipated as heat (Pw) as a function of the stator length-rotor diameter ratio (L/D)

| L/D | 0.6 | 0.67 | 0.75 | 0.82 |
|---|---|---|---|---|
| (M_{iH}) (Nm) | 0.1 | 0.18 | 0.2 | 0.14 |
| (M_{iM})(Nm) | 0.16 | 0.23 | 0.28 | 0.2 |
| P₁(W) | 800 | 900 | 1000 | 1100 |
| Theta (%) | 45 | 46 | 47 | 48 |
| Pw (W) | 440 | 486 | 530 | 572 |

The results of our measurements show that, taking into account the minimal required starting torque, the inventive motor is operable only in a specific parameter range (0.6 < L/D < 0.85) and is ideal in a still narrower range (0.65 < L/D < 0.8). This can be attributed to the effect of the rotor volume and to the effect of the resistance in the rotor circuit determined by L/D. Upon the same consideration, the results of the experiments show that the inventive motor construction can be implemented with optimal operating parameters within the rotor diameter range of 60-70 mm. Taking into account the relatively low efficiency (under 50%), the motor requires intensive cooling. With input power values exceeding 1100 W it is inexpedient to apply the inventive motor construction due to the significant cooling requirements and decreasing starting torque values. Our measurements indicate that under the input power value of 800 W low starting torque limits the application of the motor.

A known rotor configuration of induction motors with equal air gap is the so called skewed-slot rotor. Measurements carried out with stepped air gap motors show an increasing starting torque if the rotor slot skew angle Fi (measured on the rotor barrel surface) is increased. In case of small skew angles (0°< Fi < 12°) the starting torque is so low that it limits the applicability of the motor. With large skew angles (22° < Fi) the starting torque increases but other parameters of the motor (speed, current load, efficiency) are gradually deteriorating. In case of the inventive motor the skew angle is proved to be suitable in the range 18° < Fi < 20°. Motors with different values of L/D have the same preferred rotor slot skew angle.

Based upon the principles described above a motor configuration is provided that is able to generate an elliptical rotating field without applying known auxiliary elements such as auxiliary phase winding and capacitor or resistor, or, in case of split-phase (shielded-pole) motors, without the application of a single-turn auxiliary phase coil.

Our invention is explained in more detail with reference to the attached drawings where
Fig. 1 shows the basic configuration of the stator and the rotor and also the flux path, and
Fig. 2 is a sectional view of the stator and the rotor.

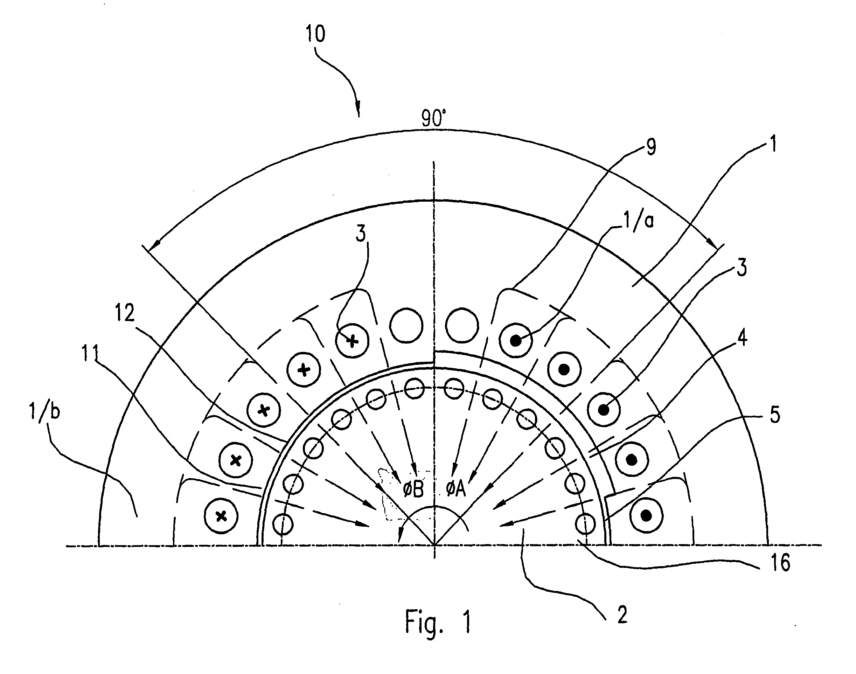

Fig. 1 illustrates the basic configuration and the flux path of the single-phase asynchronous motor with stepped air gap according to the invention.

In the single-phase asynchronous motor with stepped air gap 10 implemented according to the present invention the phase winding 3 is disposed in the slots 1/a of the stator 1. Between the rotor 2 of the motor and one portion of the pole arc 12 surface of the stator 1 a normal-size air gap 5 is formed, while an extended air gap 4 is formed between another portion of the pole arc 12 surface and the rotor 2.

The phase winding 3 disposed in the slots of the stator 1 generates the flux path shown with dashed lines in the figure. The entire magnetic flux 9 of the phase winding 3 is made up of two portions, namely of portion ΦA crossing the extended air gap 4 and part ΦB crossing the normal-size air gap 5. The two flux portions are spaced apart angularly at approximately 90°.

The reluctance of the magnetic circuit of the motor 10 is composed of two parts, that is, of the reluctance constituted by the air gap (extended air gap 4 and normal-size air gap 5) and the reluctance of the flux path length within the iron laminations. The path length in the laminations and the resulting reluctance is identical in case of ΦA and ΦB. However, the case is different with reluctances resulting from the extended air gap 4 and the normal-size air gap 5, because the reluctances are proportional to the relative sizes of air gaps. Thus, the extended air gap 4 produces a 3-5 times greater reluctance to ΦA than the reluctance to ΦB constituted by normal-size air gap 5. The different reluctances present in the magnetic circuits cause a time shift between the two flux portions ΦA and ΦB.

In the stator frame 1/b the magnetic flux illustrated by dashed lines in Fig. 1 has a circular path, reaching air gap 4, 5 through the teeth 11 of the stator 1. Having passed air gap 4, 5, magnetic flux is conducted by the sides of squirrel-cage rotor 2, the teeth 11 of the stator 1, and stator frame 1/b. Stator frame 1/b, teeth 11, squirrel-cage rotor 2, and rotor frame 16 are made of iron materials developed specifically for electric motors, and have a magnetic conductance that is approximately a thousand times better than that of air. Thus, the combined reluctance of the magnetic circuit is determined by the size of the air gaps.

All things considered, it can be stated based on the above that, by dividing the flux of the phase winding 3 into two portions with an angular separation of approx. 90°, and with the help of the phase shift caused by the different reluctances, an elliptically rotating magnetic field can be generated which in cooperation with squirrel-cage rotor 2 provides torque (in the direction of the arrow) and loadability.

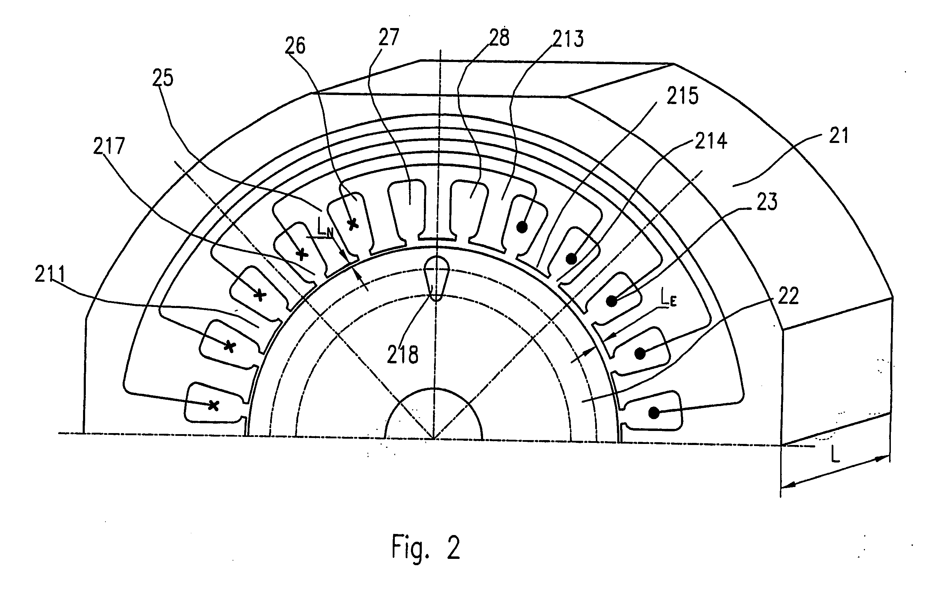

Fig. 2 shows the sectional view of the stator 21 and rotor 22 of a preferred embodiment of the stepped air gap induction motor according to the invention. The radial distance from rotor 22 of the longer teeth 25 arranged in two oppositely situated groups of 7 disposed on the stator 21 corresponds to the normal air gap LN while the radial distance between shorter teeth 213, arranged in two oppositely situated groups of 5, and rotor 22 corresponds to the extended air gap LE . Slot openings 214 located between shorter teeth 213, like slot openings 217 located between longer teeth 25 and slot openings 27 located between shorter teeth 213 and longer teeth 25 are narrowed to a size that is just wide enough for inserting the phase winding 23. Thereby magnetic losses occurring between shoulders 211, 215 of the teeth during the operation of the motor are reduced to the smallest possible amount for each tooth. Relative sizes of air gaps are chosen such that the size of the extended air gap LE is 3-5 times the size of the normal-size air gap LN. In this particular case the normal-size air gap LN is 0.3 mm and the extended air gap LE is 1.4 mm: Taking into consideration the starting torque and desired cooling parameters of the motor, applying the above air gap sizes the rotor 22 has been made with a diameter of 67 mm, with the proportion of the length L of the stator 21 and the diameter of the rotor 22 being set to 0.75. The motor having these parameters runs with an efficiency of 47 % at a power of 1000 W, the starting torque exceeding 0.2 Nm both in cold and warmed-up state. The shape of shoulders 211 of longer teeth 25 is identical with the shape of the shoulders 215 of the shorter teeth 213, which provides for a simpler stator configuration and easier manufacturing of the winding. Phase winding 23 is inserted into stator 21 symmetrically, with a shorter tooth 213 being disposed in the median plane of the phase winding 23, this configuration resulting in an increased starting torque.

Axes of symmetry of rotor slots 218 disposed on rotor 22 are skewed by 20° measured on the rotor barrel surface.

The laminated stator shown in Fig. 2 can be manufactured applying known automatic coil winding/inserting and insulating technology. It is advantageous from the aspect of manufacturing as well that the width values of slot openings 214, 217, 27 and the sizes of tooth shoulders 211, 215 are identical in the case of normal slots 26 and reduced-area slots 28. Corresponding to the shorter teeth 213 and longer teeth 25 two coil insertion rods of different thickness should be utilized in the coil insertion instrument. "Slot liner" insulators should be sized such that they ... into the reduced-area slots 28. The apparatus applied for inserting slot closing insulators should be oriented to the openings of reduced-area slots 28, and that way closing insulators can be properly inserted both in case of the intermediate slot between the longer tooth 25 and shorter tooth 213 and in case of normal-size slot 26.

Our invention has a number of advantages compared to known solutions. One of the greatest of these advantages is that, because the configuration of the single-phase asynchronous motor with stepped air gap according to our invention generates an elliptical rotating magnetic field without using extra electronic elements, contrary to the widely marketed conventional single-phase induction motors known from the literature, the auxiliary winding, the resistor and capacitor can be disposed of.

As a summary, it can be stated that currently manufactured, commercially available single-phase induction motors have the common characteristics of applying an auxiliary winding and comprising passive electronic elements associated with the auxiliary winding. These associated electronic elements render both the electric circuit and manufacturing technology of the motors more complex. Consequently, such motors provide less reliable operation and have higher operation error rate.

Facing these disadvantages, the need has arisen both among users and manufacturers for developing more modern, more reliable single-phase motors that comprise simpler electric circuits and are easier to manufacture. The solution according to our invention answers this demand.

The invention does not comprise auxiliary elements, has a simpler configuration, operates more reliably than conventional solutions, with a significantly reduced probability of failure. As a supplemental advantage it should be mentioned that the inventive motor provides easier manufacturing and is more economical compared to known solutions.

### List of references

- ΦA, ΦB: flux portions
- 1/a: stator slot
- 1/b: stator frame
- L: length
- L_{E}: air gap
- L_{N}: air gap
- 1: stator
- 2: squirrel cage rotor
- 3: phase winding
- 4: extended air gap
- 5: normal-size air gap
- 9: magnetic flux
- 10: motor
- 11: tooth
- 12: pole arc
- 16: rotor frame
- 21: stator
- 22: rotor
- 23: phase winding
- 25: longer tooth
- 26: normal-size slot
- 27: slot opening
- 28: reduced-area slot
- 211: tooth shoulder
- 213: shorter tooth
- 214: slot opening
- 215: tooth shoulder
- 217: slot opening
- 218: rotor slot

## Claims

1. Single-phase asynchronous motor with stepped air gap comprising a laminated stator having shorter and longer teeth and slots adapted for receiving electromagnetic winding located there and a rotor having skewed slots, **characterised by** that narrowed slot openings (217, 214, 27), extending along the full length (L) of the stator (21), are disposed between the shoulders (211) of the longer teeth (25), between the shoulders (215) of the shorter teeth (213), and between the shoulders (211, 215) of the longer (25) and shorter (213) teeth, with the diameter of the rotor (22) falling into the range of 60-70 mm, and with the ratio of the stator (21) length (L) and the rotor (22) diameter being between 0.6 and 0.85, where the air gap between the rotor (22) and the shorter teeth (213) is 3-5 times greater than the air gap between the rotor (22) and the longer teeth (25).

2. The motor according to Claim 1, **characterised by** that the width of the shoulders (215) of the shorter teeth (213) is equal to the width of the shoulders (211) of the longer teeth (25).

3. The motor according to any one of Claims 1 or 2, **characterised by** that the shape of the shoulders (215) of the shorter teeth (213) is identical to the shape of the shoulders (211) of the longer teeth (25).

4. The motor according to any one of the preceding Claims, **characterised by** that the ratio of the stator (21) length (L) and the rotor (22) diameter falls between 0.65 and 0.8.

5. The motor according to any one of the preceding Claims, **characterised by** that a shorter tooth (213) is disposed on the stator (21) in the median plane of the phase winding (23) of the motor.

6. The motor according to any one of the preceding Claims, **characterised by** that altogether 24 teeth (25, 213) are disposed on the stator thereof, of which 8-12 shorter teeth (213) are located in two groups facing each other on opposite sides of the stator.

7. The motor according to any one of the preceding Claims, **characterised by** that the skew of the slots (218) of the rotor (22) is in the range of 18-20°.

## Patentansprüche

1. Einphasen Asynchron Motor mit gestuftem Luftspalt, mit einem laminierten Stator, mit kürzeren und längeren Zähnen und Nuten für die Aufnahme einer elektromagnetischen Wicklung und einem Rotor mit schrägen Nuten, **dadurch gekennzeichnet, dass** sich die verengten Nutenöffnungen (217, 214, 27), entlang der vollen Länge (L) des Stators (21) erstrecken, zwischen den Schultern (211) der längeren Zähnen (25), zwischen den Schultern (215) der kürzeren Zähne (213), und zwischen den Schultern (211, 215) der längeren (25) und kürzeren (213) Zähne, wobei der Durchmesser des Rotors (22) in den Bereich von 60-70 mm fällt, sowie das Verhältnis der Länge (L) des Stators (21) zum Durchmesser des Rotors (22) zwischen 0,6 und 0,85 ist, und wobei der Luftspalt zwischen dem Rotor (22) und den kürzeren Zähnen (213) 3-5-mal größer ist als der Luftspalt zwischen dem Rotor (22) und den längeren Zähnen (25).

2. Der Motor nach Anspruch 1, **dadurch gekennzeichnet, dass** die Breite der Schulter (215) der kürzeren Zähne (213) mit der Breite der Schulter (211) der längeren Zähne (25) übereinstimmt.

3. Der Motor nach Anspruch 1 oder 2, **dadurch gekennzeichnet, dass** die Form der Schulter (215) der kürzeren Zähne (213) mit der Form der Schulter (211) der längeren Zähne (25) identisch ist.

4. Der Motor nach einem der vorangehenden Ansprüche, **dadurch gekennzeichnet, dass** das Verhältnis der Länge (L) des Stators (21) zum Durchmesser des Rotors (22) zwischen 0,65 und 0,8 liegt.

5. Der Motor nach einem der vorangehenden Ansprüche, **dadurch gekennzeichnet, dass** ein kürzerer Zahn (213) auf dem Stator (21) in der Mittelebene der Phasenwicklung (23) des Motors angeordnet ist.

6. Der Motor nach einem der vorangehenden Ansprüche, **dadurch gekennzeichnet, dass** insgesamt 24 Zähne (25, 213) auf dem Stator angeordnet sind, von denen 8-12 kürzere Zähne (213) in zwei Gruppen, auf einander entgegengesetzten Seiten der Stators angeordnet sind.

7. Der Motor nach einem der vorangehenden Ansprüche, **dadurch gekennzeichnet, dass** die Schräglage der Nuten (218) des Rotors (22) im Bereich von 18-20° ist.

## Revendications

1. Moteur asynchrone monophasé avec entrefer étagé comprenant un stator laminé avec des dents plus courtes et plus longues, des fentes pour recevoir un enroulement électromagnétique disposé là, et un rotor ayant des fentes obliques, **caractérisé en ce que** les ouvertures (217, 214, 27) restreintes des fentes étendantes sur la pleine longueur (L) du stator (21) sont disposé entre les épaulements (211) des dents (25) plus longues, entre les épaulements (215) des dents (213) plus courtes et entre les épaulements (211, 215) des dents (25) plus longues et des dents (213) plus courtes, le diamètre du rotor (22) étant dans la gamme de 60-70 mm, le rapport entre la longueur (L) du stator et le diamètre du rotor (22) étant entre 0,6 et 0,85, et l' entrefer entre le rotor (22) et les dents (213) plus courtes étant 3-5 fois supérieure à la fente entre le rotor (22) et les dents (25) plus longues.

2. Le moteur selon la revendication 1, **caractérisé par le fait que** le largueur des épaulements (215) des dents (213) plus courtes est égal à la largueur des épaulements (211) des dents (25) plus longues.

3. Le moteur selon l'une quelconque des revendications 1 ou 2, **caractérisé par le fait que** la forme des épaulements (215) des dents (213) plus courtes est identique à la largueur des épaulements (211) des dents (25) plus longues.

4. Le moteur selon l'une quelconque des revendications précédentes, **caractérisé par le fait que** le rapport entre la longueur (L) du stator et le diamètre du rotor (22) est entre 0,6 et 0,8.

5. Le moteur selon l'une quelconque des revendications précédentes, **caractérisé par le fait qu'** une dent (213) plus courte est disposé sur le stator (21) dans le plan médian de l'enroulement de phase (23) du moteur.

6. Le moteur selon l'une quelconque des revendications précédentes, **caractérisé par le fait qu'**au total 24 dents (25, 213) sont disposés sur le stator dont 8-12 dents (213) plus courtes sont disposés dans deux groupes face à face sur les côtés opposés du stator.

7. Le moteur selon l'une quelconque des revendications précédentes, **caractérisé par le fait que** l'obliquité des fentes (218) du rotor (22) est dans la gamme de 18-20 °.
